Europäisches Patentamt

European Patent Office

Office européen des brevets

(19)

(11) Veröffentlichungsnummer: **0 012 441**
**A1**

# (12) EUROPÄISCHE PATENTANMELDUNG

(21) Anmeldenummer: 79105183.2

(22) Anmeldetag: 14.12.79

(51) Int. Cl.³: **F 16 B 25/00**

(30) Priorität: 14.12.78 DE 2853976
03.12.79 DE 2948595

(43) Veröffentlichungstag der Anmeldung: 25.06.80
Patentblatt 80/13

(84) Benannte Vertragsstaaten: **AT BE CH FR GB IT LU NL SE**

(71) Anmelder: **Eberhard Jaeger GmbH & Co. KG, Untere Bienhecke, D-5928 Laasphe (DE)**

(72) Erfinder: **Grossberndt, Hermann, Im Wabach 7, D - 5928 Laasphe (DE)**
Erfinder: **Ociepka, Kurt, Berliner Strasse 19, D - 5928 Laasphe 13 (DE)**

(74) Vertreter: **Schlee, Richard, Dipl.-Ing. et al, Patentanwälte Dipl.-Ing. R. Schlee Dipl.-Ing. A. Missling Bismarckstrasse 43, D-6300 Lahn-Giessen 1 (DE)**

(54) **Selbstfurchende Bohrschraube.**

(57) Schraube, deren Spitze (23) als Bohrer ausgebildet ist und deren Gewindegänge (26) verhältnismäßig scharf ausgebildet sind, so daß sie ein Gewinde in relativ weiche Materialien, wie z. B. Kunststoff, einfurchen können. Die Bohrspitze (23) hat einen hinteren Abschnitt (24) (Länge $l_1$), dessen Durchmesser gleichbleibend ist, und einen vorderen Abschnitt (25 (Länge $l_2$), der sich zur Schraubenspitze hin verjüngt. Die gesamte Bohrspitze ist mit einem Gewinde (27) versehen, dessen Außendurchmesser kleiner ist als der Außendurchmesser des Gewindes (26), das sich zwischen Bohrspitze (23) und Schraubenkopf (21) befindet. Durch die Gewindegänge (27) an der Bohrspitze (23) wird die Schraube in das zu bohrende Material eingezogen, so daß keine Vorschubkraft ausgeübt werden muß. Die Bohrspitze (23) kann mit einer Spannut (28) versehen sein, die eine Schneidkante (28a) bildet. Die Spannut (28) gestattet ohne unzuträgliche Erwärmung das Bohren von thermoplastischem Kunststoff mit hoher Drehzahl.

Patentanwälte

Dipl.-Ing. Richard Schlee
Dipl.-Ing. Arne Missling

0012441

6300 Lahn-Giessen 1
Bismarckstrasse 43
Telefon: (0641) 71019

Eberhard Jaeger GmbH & Co. KG,
5928 Laasphe

Selbstfurchende Bohrschraube

Die Erfindung bezieht sich auf eine selbstfurchende Bohrschraube mit einem Schraubenkopf, an dem sich Mitnehmerflächen zur Übertragung des Drehmomentes befinden, einem Halteteil mit Gewindegängen und einer Bohrspitze, deren Außendurchmesser kleiner ist als der Durchmesser des Halteteiles.

Selbstfurchende Bohrschrauben haben den Vorteil, daß das Vorbohren von Schraubenlöchern und das Schneiden von Gewinden nicht erforderlich ist. Beim Vorbohren mit bekannten Bohrschrauben muß auf die Schraube ein verhältnismäßig starker axialer Druck ausgeübt werden, um zu erreichen, daß die Bohrspitze in das zu bohrende Material eindringt. Die Ausübung dieses axialen Druckes ist unbequem.

Durch die Erfindung soll eine selbstfurchende Bohrschraube geschaffen werden, deren Bohrspitze sich infolge ihrer Rotation in das zu bohrende Material einzieht.

Diese Aufgabe wird nach der Erfindung dadurch gelöst, daß die Bohrspitze einen an den Halteteil anschließenden hinteren Abschnitt mit über seine Länge gleichbleibendem Durchmesser und einen an den hinteren Abschnitt anschließenden vorderen Abschnitt aufweist, der sich zum vorderen Ende der Schraube hin verjüngt und beide Abschnitte mit Gewindegängen versehen sind, deren Außendurchmesser wesentlich kleiner ist als der Außendurchmesser der Gewindegänge des Halteteiles.

Wenn mit einer so beschaffenen Bohrschraube ein Loch geringer Tiefe gebohrt ist, kommen die Gewindegänge der Bohrspitze mit dem zu bohrenden Material in Eingriff, wobei diese Gewindegänge ein Gewinde in das zu bohrende Material eingraben. Die Bohrspitze wird dadurch in das Material eingezogen. Je tiefer das Bohrloch ist, desto mehr Gewindegänge kommen mit dem zu bohrenden Material in Eingriff, da nicht nur der sich verjüngende vordere Abschnitt der Bohrspitze mit Gewinde versehen ist, sondern auch der daran anschließende hintere Abschnitt. Je mehr Gewindegänge mit dem Material in Eingriff kommen, desto größer wird die mögliche Einziehkraft. Da der Außendurchmesser der Gewindegänge an der Bohrspitze kleiner ist als der Außendurchmesser der Gewindegänge des Halteteiles, bleibt unzerschnittenes Material übrig, in das sich die Gewindegänge des Halteteiles ein Gewinde einfurchen können. Die Bohrspitze ist verhältnismäßig lang, so daß eine Wand, z.B. die Wand eines Fensterprofiles aus Kunststoff, vollständig durchbohrt werden kann, bevor das Gewinde des Halteteiles mit dem durchbohrten Material in Eingriff kommt.

Wenn auf spezielle Schneidkanten verzichtet wird, was für viele Anwendungszwecke möglich ist, erfordert die Herstellung der Bohrspitze praktisch keinen zusätzlichen Aufwand, da das Gewinde an der Bohrspitze im gleichen Zug mit dem Gewinde des Halteteiles hergestellt werden kann. Bei der Herstellung des Gewindes durch Walzen, also bei Anwendung

- 3 -

0012441

des üblichen Herstellverfahrens, sind lediglich an den Walzbacken zusätzliche Abschnitte anzubringen, die das Gewinde an der Bohrspitze formen.

Vorzugsweise ist der Außendurchmesser der Gewindegänge der Bohrspitze etwa gleich dem Kerndurchmesser des Halteteiles (Anspruch 2). Bei diesen Verhältnissen erhält man einen Eingriff der Gewindegänge des Halteteiles über ihre gesamte Höhe. Unter die Erfindung fallen aber auch andere Verhältnisse zwischen Durchmesser der Bohrspitze und Durchmesser des Halteteiles. Je nach Werkstoff, in den die Schraube einzudrehen ist, kann es vorteilhaft sein, daß das Bohrloch einen Durchmesser hat, der größer oder auch etwas kleiner ist als der Kerndurchmesser des Halteteiles.

Vorteilhafterweise ist die Steigung des Gewindes an der Bohrspitze kleiner als die Steigung des Gewindes am Halteteil (Anspruch 3). Diese Verhältnisse sind deshalb günstig, weil der Durchmesser des Bohrspitzengewindes wesentlich kleiner ist als der Durchmesser des Halteteilgewindes. Auch die Formung des Gewindes an der Bohrspitze wird bei diesen Verhältnissen vereinfacht. Auch die Flankenwinkel der beiden Gewinde sind vorzugsweise verschieden (Anspruch 4), wobei das Gewinde des Halteteiles vorzugsweise einen kleinen Flankenwinkel hat, um ein leichtes Einschneiden in das Gegenmaterial, z.B. Kunststoff, zu gewährleisten. Ein größerer Flankenwinkel an der Bohrspitze erleichtert die Formung des Bohrspitzengewindes und ergibt stabile Gewindegänge, was für die Bohrfunktion vorteilhaft ist. Günstige Winkel für die beiden Gewinde sind in den Ansprüchen 5 und 6 angegeben.

Die Ausführungsform nach Anspruch 7 ist besonders günstig für die Herstellung und für das Eindrehen in Kunststoff oder ähnliches fließfähiges Material, da einmal die Einschnürung den Materialfluß bei spanloser Formgebung des

- 4 -

0012441

Gewindes begünstigt und zum anderen die Einschnürung günstige Gleitflächen für das Abgleiten des beim Furchen des Gewindes verdrängten Gegenmaterials bilden, so daß das verdrängte Material in den Bereich der Einschnürung gelangt.

Besonders gut geeignet ist der im Anspruch 8 angegebene Werkstoff wegen seines relativ geringen Preises. Wenn Schrauben aus diesem Werkstoff, der an sich rostgefährdet ist, so verwendet werden sollen, daß die Gefahr des Rostens besteht, kann man gemäß Anspruch 9 galvanisch veredelte Schrauben verwenden. Bei höheren Anforderungen an Korrosionsbeständigkeit können Werkstoffe gemäß den Ansprüchen 10 und 11 verwendet werden.

Mit einer Schraube ohne Schneidkante werden verhältnismäßig große Reibungskräfte auf das zu bohrende Material ausgeübt, da der vordere Abschnitt der Bohrspitze hauptsächlich eine mahlende Wirkung auf den Werkstoff ausübt. Beim Bohren thermoplastischer Kunststoffe kann durch den Mahleffekt der Bohrspitze bei höheren Drehzahlen eine so große Wärmeentwicklung stattfinden, daß der thermoplastische Kunststoff erweicht. Die mögliche Einziehkraft der Bohrspitze wird dadurch reduziert, weil der erweichte Kunststoff nur noch geringe Kräfte aufnehmen kann.

Gemäß einer Weiterbildung der Erfindung soll die Schraube so weitergebildet werden, daß auch beim Bohren von Werkstoffen, die bei relativ niedrigen Temperaturen erweichen, insbesondere beim Bohren in thermoplastischen Kunststoffen, mit hoher Drehzahl gearbeitet werden kann, ohne daß die Einziehwirkung der Bohrspitze verschlechtert wird. Dies wird gemäß Anspruch 12 dadurch erreicht, daß im Bereich der Bohrspitze an ihrer Außenseite mindestens eine Spannut mit Schneidkante angeordnet ist.

Bei einer so ausgebildeten Bohrschraube wird der Bohreffekt nicht mehr durch Mahlen des vorderen Abschnittes der Bohrspitze erzeugt, sondern durch die Wirkung der Schneidkante. Durch diese andere Art der Bohrspitze wird die Reibung zwischen Bohrspitze und zu bohrendem Material stark vermindert, so daß auch bei hohen Drehzahlen keine unzuträgliche Erwärmung des zu bohrenden Materials entsteht. Auch thermoplastische Kunststoffe behalten deshalb ihre Festigkeit, so daß die Einziehkraft groß sein kann. Es hat sich gezeigt, daß die Gewindegänge an der Bohrspitze ihren Einzieheffekt trotz Unterbrechung durch die Spannut voll entwickeln.

Die Spannut kann sich gemäß Anspruch 13 über die gesamte Länge der Bohrspitze erstrecken. Unter die Erfindung fallen aber auch Ausführungsformen, bei denen die Spannut auf einen vorderen Bereich der Bohrspitze beschränkt ist. Wenn man die Spannut über die gesamte Länge der Bohrspitze verlaufen läßt, kann man der Spannut eine besonders günstige Form geben. Auch beginnt die Schneidwirkung schon beim Ansetzen der Bohrspitze.

Die Spannut ist vorzugsweise gemäß den Ansprüchen 14 bis 18 ausgeführt. Damit erhält man einen besonders guten Schneideffekt. Bei der Formgestaltung gemäß Anspruch 16 ist die Herstellung besonders leicht durchführbar, z.B. mit einem Scheibenfräser, wie im Anspruch 18 angegeben. Bei Herstellung der Spannut durch Fräsen gewinnt man auch ohne Probleme eine Form gemäß Anspruch 17, d.h. eine Form, bei der die Gewindegänge der Bohrspitze am Rand der Spannut mit scharfen Kanten enden. Diese scharfen Kanten begünstigen das Einformen von Gewindegängen in das gebohrte Material durch die Gewindegänge der Bohrspitze und damit auch das Auffangen hoher Einziehkräfte durch das gebohrte Material.

Bei der erfindungsgemäßen Schraube wirkt die Bohrspitze ähnlich wie ein Gewindebohrer.

In der Zeichnung sind zwei Ausführungsbeispiele der Erfindung dargestellt. Es zeigen:

Fig. 1    eine Ansicht einer erfindungsgemäßen Schraube ohne Schneidkante,

Fig. 2    einen vergrößerten Ausschnitt aus Fig. 1 im Bereich des strichpunktierten Kreises II in Fig. 1,

Fig. 3    einen vergrößerten Ausschnitt aus Fig. 1 im Bereich des strichpunktierten Kreises III,

Fig. 4    eine stark vergrößerte perspektivische Darstellung einer Schraube mit Schneidkante,

Fig. 5    einen Querschnitt im Bereich der Bohrspitze entsprechend der Linie V-V in Fig. 4 und

Fig. 6    einen Querschnitt nach Linie VI-VI in Fig. 4.

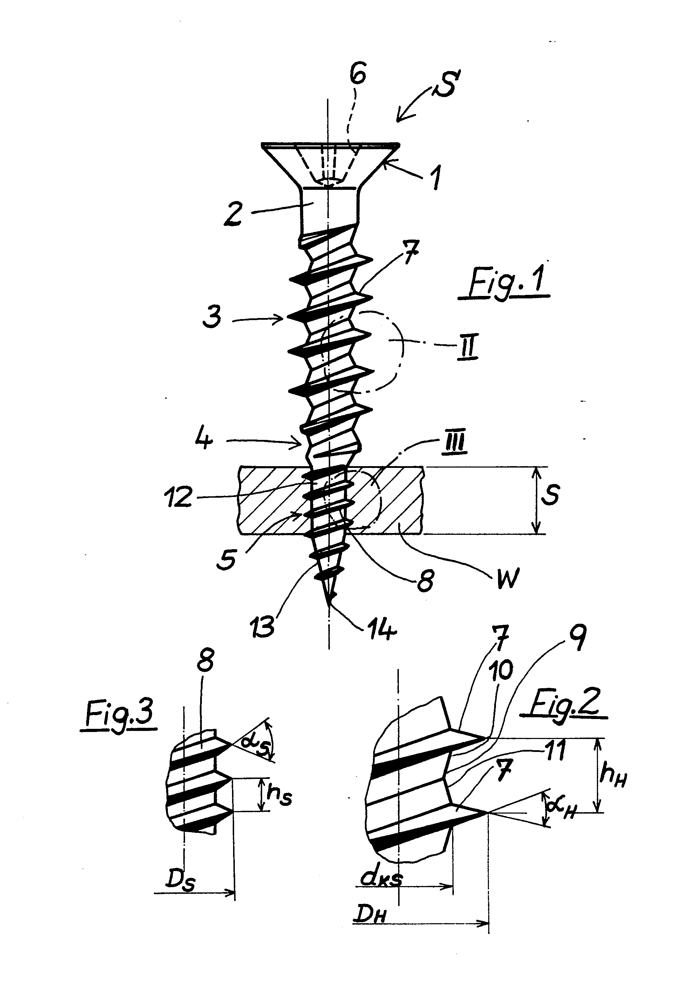

Die Schraube ist auch in Fig. 1 vergrößert dargestellt. Gängige Schraubengrößen haben Außendurchmesser zwischen 3 und 6 mm, wenngleich die Erfindung nicht auf diesen Bereich beschränkt ist.

Die insgesamt mit S bezeichnete Schraube hat einen Schraubenkopf 1, einen an den Schraubenkopf anschließenden Übergangsbereich 2, einen an den Übergangsbereich 2 anschließenden Halteteil 3, einen an den Halteteil 3 anschließenden Anschnittbereich 4 und eine insgesamt mit 5 bezeichnete Bohrspitze. Der Schraubenkopf ist bei dem gezeichneten Beispiel als Senkkopf ausgebildet, an dessen Oberseite sich ein Kreuzschlitz 6 für den Angriff eines Drehwerkzeuges befindet. Der Halteteil 3 hat Gewindegänge 7 mit einem relativ kleinen Flankenwinkel, während die Bohrspitze 5 Gewindegänge 8 von wesentlich größerem Flankenwinkel aufweist. Die Gewindegänge sollen nachfolgend anhand der Fig. 2 und 3 betrachtet werden.

Der Flankenwinkel an den Gewindegängen 7 ist beim gezeichneten Beispiel 30°. Zwischen zwei benachbarten Gewindegängen 7 befindet sich eine Einschnürung 9, deren engste Stelle in der Mitte zwischen den benachbarten Gewindegängen liegt. Das Profil der Einschnürung ist durch die geraden Linien 10 und 11 begrenzt, die dachförmig zueinander verlaufen und an den Fußpunkten der Gewindegänge 7 ansetzen, so daß ausgehend von den Fußpunkten Gleitflächen vorhanden sind, die an der engsten Stelle 9 der Einschnürung zusammenlaufen.

Wie man aus Fig. 1 ersehen kann, nimmt die Höhe der Gewindegänge im Anschnittbereich 4 in Richtung der Bohrspitze 5 ab. Dies erleichtert das Eindringen des Halteteiles in das Bohrloch.

Die Bohrspitze 5 hat einen zylindrischen Bereich 12 (hinterer Abschnitt der Bohrspitze) und einen etwa kegelförmigen Bereich 13 (vorderer Abschnitt der Bohrspitze), der zu einer Spitze 14 ausläuft. Über die gesamte Länge der Bohrspitze erstreckt sich ein eingängiges Gewinde mit den Gewindegängen 8. Die Gewindegänge 8 haben (siehe Fig. 3) einen Flankenwinkel $\alpha_S$. Der Winkel $\alpha_S$ ist wesentlich größer als der Winkel $\alpha_H$ und beträgt beim dargestellten Beispiel 60°. Auch ist die Steigung $h_S$ des Gewindes 8 an der Bohrspitze wesentlich kleiner als die Steigung $h_H$ des Gewindes 7 am Halteteil 3 und im Anschnittbereich 4. Der Außendurchmesser $D_S$ des Gewindes an der Bohrspitze ist wesentlich kleiner als der Außendurchmesser $D_H$ des Gewindes am Halteteil. Der Außendurchmesser $D_S$ ist etwa gleich dem Durchmesser $d_{KS}$ am Halteteil, wobei $d_{KS}$ nicht der Durchmesser im Bereich der engsten Stelle 9 der Einschnürung ist, sondern im Bereich des Ansatzpunktes der Linien 10, 11 an den Fußpunkten der Gewindegänge.

Die Schraube ist für den Eingriff mit einer Wand W bestimmt, deren Dicke s nicht oder jedenfalls nicht wesentlich größer ist als die Länge des zylindrischen Bereiches 12 der Bohrspitze 5. Es soll also gewährleistet sein, daß die Bohrspitze die Wand W vollständig durchbohrt hat, bevor der Anschnittbereich 4 des Gewindes 7 mit der Wand W in Eingriff kommt. Beim Ansetzen der Schraube mahlt sich zunächst die Spitze 13 in das Material der Wand W ein. Schließlich dringt auch der zylindrische Teil der Bohrspitze in das Wandmaterial ein. Ab einer gewissen Einschraubtiefe kann das Gewinde 8 ein Muttergewinde furchen, so daß der Vorschub der Schraube der Steigung $h_S$ des Gewindes 8 entspricht. Nachdem die Wand W vollständig durchbohrt ist, kommt der Anschnittbereich 4 mit der Wand in Eingriff, wobei ein Gewinde gefurcht wird. Hierbei wird die Schraube S entsprechend der Steigung des Gewindes 7 vorgeschoben. Die Schraube findet mit ihrem Kopf 1 eine Anlage an einer weiteren nicht gezeigten Wand, bevor der Halteteil 3 vollständig durch die Wand 4 hindurchgeschraubt ist, d.h. der Übergangsbereich 2 liegt im eingeschraubten Zustand oberhalb der Wand W. Das Einfurchen des Gewindes wird durch den kleinen Flankenwinkel $\alpha_H$ des Halteteiles erleichtert. Das Abgleiten des Wandmaterials in den Bereich der Einschnürung wird durch die durch die Linien 10 und 11 definierten Flächen erleichtert.

Die Schraube nach Fig. 4 ist im Vergleich mit einer üblichen Schraubengröße, z.B. einer Schraube mit einem Außendurchmesser von 4 mm, 10-fach vergrößert. Die Schraube hat in Übereinstimmung mit der Schraube nach den Fig. 1 bis 3 einen Schraubenkopf 21, einen Halteteil 22 und eine Bohrspitze 23. Das Profil der Gewindegänge kann gleich sein wie bei der Schraube nach den Fig. 1 bis 3.

Die Bohrspitze 23 hat auch bei dieser Ausführungsform einen hinteren Abschnitt 24, der sich über die Länge $l_1$ erstreckt

und einen vorderen Abschnitt 25, der sich über die Länge l$_2$ erstreckt. Der hintere Abschnitt 24 hat über seine Länge einen gleichbleibenden Durchmesser, während sich der Abschnitt 25 zur Spitze hin verjüngt.

Am Halteteil 22 befinden sich Gewindegänge 26, die über die gesamte Länge des Halteteiles einen gleichen Durchmesser haben. An der Bohrspitze 23 befinden sich Gewindegänge 27, deren Außendurchmesser auch im hinteren Abschnitt 24 der Bohrspitze wesentlich kleiner ist als der Durchmesser der Gewindegänge 26. Die Gewindegänge 27 haben längs des Abschnittes 24 gleiche Durchmesser. Im vorderen Abschnitt 25 der Bohrspitze nimmt der Durchmesser der Gewindegänge zur Spitze hin kontinuierlich ab.

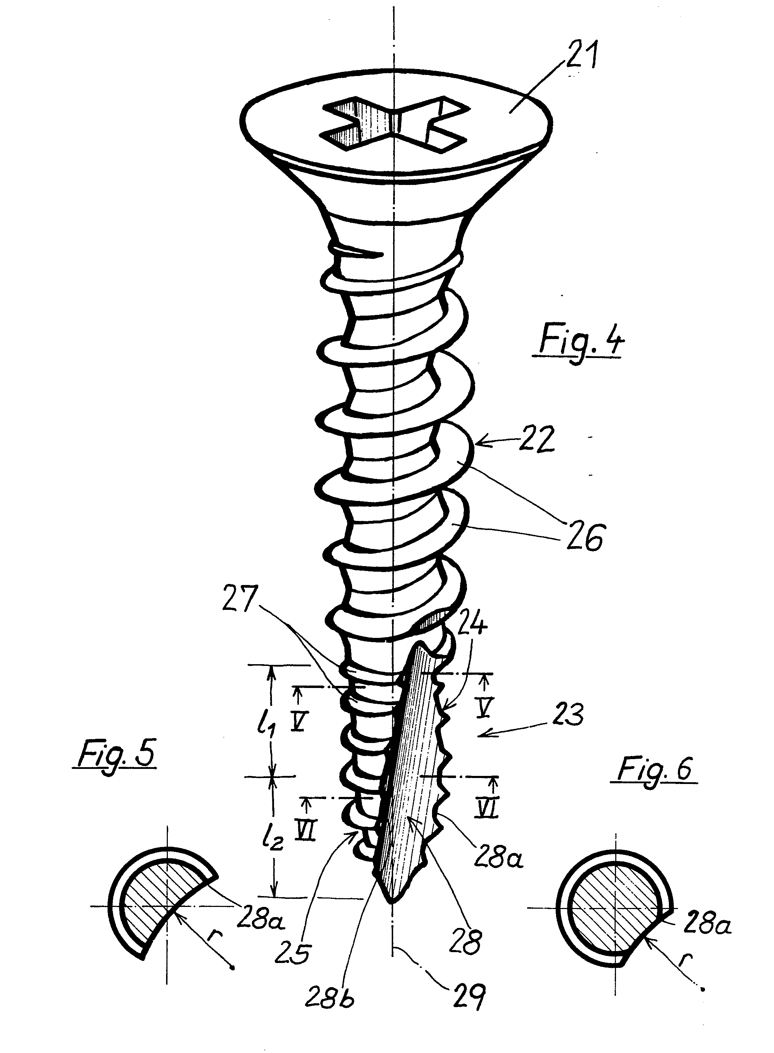

Längs der gesamten Bohrspitze 23 erstreckt sich eine Spannut 28, die als Hohlkehle ausgebildet ist, was man insbesondere aus den Schnitten nach den Fig. 5 und 6 ersehen kann. Die Hohlkehle 28 ist ein Teil einer Zylinderfläche. Der Krümmungsradius r ist längs der gesamten Spannut gleichbleibend. Die Spannut verläuft schräg zu der Längsachse 29 der Schraube. Die Schräglage ist derart, daß von der Kante 28a, an der die Hohlkehle in die Außenfläche der Bohrspitze übergeht, näher zur Bohrspitze hin liegende Bereiche in Drehrichtung der Schraube gesehen gegenüber weiter hinten liegenden Bereichen voreilen. Die Schräglage ist jedoch nur gering.

Bei einer Schraube mit Rechtsgewinde, wie sie in Fig. 4 dargestellt ist, wirkt hauptsächlich die Kante 28a schneidend, während die Kante 28b am Schneidvorgang kaum beteiligt ist. Die Kanten 28a und 28b entstehen durch die Verschneidung der Hohlkehle mit der Außenfläche der Bohrspitze. Diese Verschneidung wird besonders scharfkantig, wenn die Spannut 28

durch Zerspanung des Schraubenmaterials, z.B. durch Fräsen, hergestellt wird. Hierzu verwendet man vorteilhafterweise einen Scheibenfräser, wobei die Relativbewegung zwischen Fräser und Schraube in Längsrichtung der Hohlkehle 28 verläuft. Der Scheibenfräser hat ein Schneidenprofil mit dem Krümmungsradius r.

Bei der Benutzung einer erfindungsgemäßen Schraube beginnt die Schneide 28a schon unmittelbar nach dem Ansetzen der Schraube an das zu bohrende Material zu schneiden, da die Schneidkante bis zur Spitze der Schraube reicht. Schon nach Eindringen der vordersten Gewindegänge 27 beginnen diese zu fassen, wodurch die Schraube in den Werkstoff eingezogen wird. Die mögliche Einzugskraft ist umso größer, je mehr Gewindegänge 27 mit dem Werkstoff in Eingriff gekommen sind.

Nachdem die Bohrspitze 23 vollständig in den zu bohrenden Werkstoff eingedrungen ist, formen die Gewindegänge 26 des Halteteiles 27 ein größeres Gewinde in das gebohrte Loch. Auch diese Schraube ist vorzugsweise zum Einschrauben in Wände bestimmt, deren Dicke nicht größer ist als die Länge der Bohrspitze. In der Regel sind die zu durchbohrenden Wände nicht dicker als die Länge $l_1$ des hinteren Abschnittes der Bohrspitze.

Die erfindungsgemäße Schraube kann mit hoher Drehgeschwindigkeit der Schraube verarbeitet werden, da dank der Schneidwirkung der Schneidkante 28a eine Erwärmung und damit Erweichung des zu bohrenden Materials vermieden wird.

- 1 -

Ansprüche:

1. Selbstfurchende Bohrschraube mit einem Schraubenkopf, an dem sich Mitnehmerflächen zur Übertragung des Drehmomentes befinden, einem Halteteil mit Gewindegängen und einer Bohrspitze, deren Außendurchmesser kleiner ist als der Durchmesser des Halteteiles, dadurch gekennzeichnet, daß die Bohrspitze (5; 23) einen an den Halteteil (3; 22) anschließenden hinteren Abschnitt (12; 24) mit über seine Länge ($l_1$) gleichbleibendem Durchmesser und einen an den hinteren Abschnitt anschließenden vorderen Abschnitt (13; 25) aufweist, der sich zum vorderen Ende der Schraube (S) hin verjüngt und beide Abschnitte (12, 13; 24, 25) mit Gewindegängen versehen sind, deren Außendurchmesser ($D_S$) wesentlich kleiner ist als der Außendurchmesser ($D_H$) der Gewindegänge (7; 26) des Halteteiles (3; 22).

2. Bohrschraube nach Anspruch 1, dadurch gekennzeichnet, daß der Außendurchmesser ($D_S$) der Gewindegänge (8; 27) der Bohrspitze (5; 23) etwa gleich dem Kerndurchmesser ($d_{KS}$) des Halteteiles (3; 22) ist.

3. Bohrschraube nach einem der vorhergehenden Ansprüche, dadurch gekennzeichnet, daß die Steigung ($h_S$) des Gewindes (8; 27) an der Bohrspitze (5; 23) kleiner ist als die Steigung ($h_H$) des Gewindes (7; 26) am Halteteil (3; 22).

- 2 -

4. Bohrschraube nach einem der vorhergehenden Ansprüche, dadurch gekennzeichnet, daß der Flankenwinkel ($\alpha_H$) an den Gewindegängen (7; 26) des Halteteiles (3; 22) kleiner ist als der Flankenwinkel ($\alpha_S$) an den Gewindegängen (8; 27) der Bohrspitze (5; 23).

5. Bohrschraube nach Anspruch 4, dadurch gekennzeichnet, daß der Flankenwinkel ($\alpha_S$) an den Gewindegängen (8; 27) der Bohrspitze (5; 23) etwa 60° beträgt.

6. Bohrschraube nach einem der vorhergehenden Ansprüche, dadurch gekennzeichnet, daß der Flankenwinkel ($\alpha_H$) am Halteteil (3; 22) kleiner als 45° ist, vorzugsweise etwa 30°.

7. Bohrschraube nach einem der vorhergehenden Ansprüche, dadurch gekennzeichnet, daß am Halteteil (3; 22) der Bereich zwischen zwei Gewindegängen (7; 26) eine Einschnürung aufweist, deren engste Stelle (9) etwa in der Mitte zwischen zwei Gewindegängen (7; 26) liegt, wobei sich der Kern, ausgehend von den Fußenden zweier benachbarter Gewindegänge (7; 26) verjüngt.

8. Bohrschraube nach einem der vorhergehenden Ansprüche, dadurch gekennzeichnet, daß die Schraube (S) aus Stahl mit einem Kohlenstoffgehalt bis 0,35 % besteht und einsatzgehärtet oder einsatzvergütet ist.

9. Bohrschraube nach einem der vorhergehenden Ansprüche, dadurch gekennzeichnet, daß die Schraube eine äußere Schutzschicht aufweist, die vorzugsweise galvanisch aufgetragen ist.

10. Bohrschraube nach einem der Ansprüche 1 bis 7, dadurch gekennzeichnet, daß die Schraube aus einem austenitischen Chrom-Nickel-Stahl, z.B. V2A-Stahl, besteht.

11. Bohrschraube nach einem der Ansprüche 1 bis 7, dadurch gekennzeichnet, daß die Schraube (S) aus einem ferritischen Chromstahl besteht.

12. Bohrschraube nach einem der vorhergehenden Ansprüche, dadurch gekennzeichnet, daß im Bereich der Bohrspitze (23) an ihrer Außenseite mindestens eine Spannut (28) mit Schneidkante (28a) angeordnet ist.

13. Bohrschraube nach Anspruch 12, dadurch gekennzeichnet, daß sich die Spannut (28) über die gesamte Länge $(1_1 + 1_2)$ der Bohrspitze (23) erstreckt.

14. Bohrschraube nach einem der Ansprüche 12 und 13, dadurch gekennzeichnet, daß die Spannut (28) schräg zur Längsachse (29) der Schraube verläuft, wobei die Winkelabweichung relativ zur Längsachse (29) im Bereich von 0° bis 10° liegt, vorzugsweise etwa 5° beträgt.

15. Bohrschraube nach Anspruch 14, dadurch gekennzeichnet, daß die Schräglage so orientiert ist, daß das vordere Ende der Spannut (28) am hinteren Ende vorauseilt.

16. Bohrschraube nach einem der vorhergehenden Ansprüche, dadurch gekennzeichnet, daß die Spannut (28) als Hohlkehle ausgebildet ist, die vorzugsweise über ihre gesamte Länge eine Zylinderfläche mit gleichbleibendem Krümmungsradius (r) ist.

17. Bohrschraube nach einem der Ansprüche 12 bis 16, dadurch gekennzeichnet, daß die Gewindegänge (27) der Bohrspitze (23) am Rand (28a, 28b) der Spannut (28) mit scharfen Kanten enden.

0012441

18. Bohrschraube nach einem der Ansprüche 12 bis 17, dadurch gekennzeichnet, daß die Spannut (28) durch Zerspanung des Schraubenmaterials, z.B. durch Fräsen, hergestellt ist, vorzugsweise mittels eines Scheibenfräsers, dessen Schneidenprofil dem Spannutprofil entspricht.

Fig.1

Fig.3

Fig.2

Fig.4

Fig.5

Fig.6

0012441

Nummer der Anmeldung

**Europäisches Patentamt**

**EUROPÄISCHER RECHERCHENBERICHT**

EP 79 10 5105

| | **EINSCHLÄGIGE DOKUMENTE** | | **KLASSIFIKATION DER ANMELDUNG (Int.Cl.²)** |
|---|---|---|---|
| Kategorie | Kennzeichnung des Dokuments mit Angabe, soweit erforderlich, der maßgeblichen Teile | betrifft Anspruch | |
| X | US - A - 3 682 038 (SIXTEN) <br> * Spalten 3 und 4; Figuren 4-6 * | 1,2, 12-14 | F 16 B 25/00 |
| | ENGINEERING, Band 216, Nr. 8, August 1976, Engineering Design Council, London GB Technical file no. 32: "Threaded fasteners for sheet materials". <br> * Figur 1 * | 1,4,5, 6 | |
| | US - A - 1 713 597 (FEKETE) <br> * Seite 1; Zeilen 60-95 * | 8 | **RECHERCHIERTE SACHGEBIETE (Int. Cl.²)** <br><br> F 16 B 25/00 <br> 33/00 |
| | GB - A - 703 513 (ENGLESSON) <br> * Seite 1; Zeilen 57-62 * | 9 | |
| | FR - A - 1 328 835 (ROBERTSON) <br> * Seiten 1,2; Figur 1 * | 12,16, 17 | |
| A | US - A - 3 507 183 (THURSTON) | 1 | |
| A | FR - A - 2 296 119 (NEUSS) | 1 | |
| A | DE - C - 65 519 (PARR) | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 04-03-1980 | PHILIPS |

EPA form 1503.1 06.78